# EUROPÄISCHE PATENTSCHRIFT

(11) **EP 1 020 493 B1**
(45) Veröffentlichungstag und Bekanntmachung des Hinweises auf die Patenterteilung: **18.08.2004**
(21) Anmeldenummer: 99126210.6
(22) Anmeldetag: 30.12.1999
(51) Int. Cl.: C08L 57/00, C08J 3/12, C04B 24/26

(54) **Dispersionspulver enthaltend teilacetalisierte, wasserlösliche Polyvinylalkohole, Verfahren zu seiner Herstellung sowie Verwendung**
Dispersion powder containing partially acetalised water dissolvable Polyvinylalcohol; process for its preparation and use thereof
Poudre de dispersion contenant de l'alcool polyvinylique partiellement acétalisé soluble dans l'eau, procédé pour sa préparation et son utilisation

(30) Priorität: 15.01.1999 DE 19901307
(43) Veröffentlichungstag der Anmeldung: 19.07.2000
(73) Patentinhaber: Celanese Emulsions GmbH, 61476 Kronberg/Ts. (DE)
(72) Erfinder: Schmitz, Ludwig, Dr., 68642 Bürstadt (DE); Schottler, Michael, 65474 Bischofsheim (DE); Fuss, Robert, Dr., 65835 Liederbach (DE)
(74) Vertreter: Ackermann, Joachim, Dr., Patentanwalt Dr. Ackermann

(56) Entgegenhaltungen:
- FR-A- 956 798
- FR-A- 1 189 604

## Beschreibung

Die vorliegende Erfindung betrifft Dispersionspulver enthaltend teilacetalisierte, wasserlösliche Polyvinylalkohole, die zu einer besseren Haftung von entsprechend modifizierten zementären Massen auf hydrophoben Substraten führen, Verfahren zu deren Herstellung sowie deren Verwendung.

In den letzten Jahren gewinnt die Wärmedämmung von Wohngebäuden aus ökonomischen und ökologischen Gründen immer mehr an Bedeutung. Dies wird auch durch die nunmehr seit 1995 gültige, verschärfte Wärmeschutzverordnung (WSVO III) deutlich zum Ausdruck gebracht. Schwerpunktmäßig gibt es zwei Wärmedämmsysteme: Wärmedämmputze (z.B. nach DIN 18550) und Wärmedämm-Verbundsysteme (z.B. nach UEATc Richtlinie und ÖNorm B6110).

Die Vorteile von Wärmedämm-Verbundsystemen (WDV-Systeme) wurden und werden in zahlreichen Veröffentlichungen immer wieder zum Ausdruck gebracht (z.B. in den Informationsbroschüren des Fachverbandes Wärmedämm-Verbundsysteme e.V.).
Der Aufbau ist dabei im wesentlichen festgelegt und besteht aus den Teilen Dämmplatte für die Wärmedämmung, Kleber für die Dämmplattenbefestigung auf dem Untergrund, Armierungsschicht für den Spannungsausgleich und Dekor-Putz für den Witterungsschutz (siehe z.B. Das Deutsche Malerblatt 12/96, S. 32 ff). Dämmplattenmaterialien sind in erster Linie solche auf Basis von Mineralfasern bzw. Polystyrol.

Die Dämmplattenbefestigung erfolgt dabei entweder mit einem verarbeitungsfertigen Dispersionskleber, einem Dispersionskleber mit Zementzusatz oder mit einem zementgebundenen, mit Dispersionspulver vergütetem Trockenmörtel.

Wärmedämmplatten auf Basis von Polystyrol und auch Mineralfaserplatten sind meist hydrophob. Auf solch hydrophoben Untergründen haftet jedoch ein zementgebundener, unmodifizierter Klebemörtel nicht. Um jedoch einen ausreichend festen Verbund des WDV-Systems zu gewährleisten, werden in der oben genannten UEATc-Richtlinie bzw. in der ÖNorm B6110 Mindesthaftzugfestigkeiten gefordert.

Beim Einsatz von solchen Trockenmörteln als Kleber und/oder Armierungsschicht ist deshalb der Einsatz von Dispersionspulvern zwingend notwendig, da ansonsten keine ausreichende Haftung des Klebers auf dem Dämmaterial gegeben ist. Doch auch in diesem Fall reicht oftmals, insbesondere nach den in den Richtlinien geforderten Haftzugfestigkeiten nach Naßlagerung, die durch das Dispersionspulver erzeugte, verbesserte Haftung des Klebers nicht aus, die Anforderungen zu erfüllen.

Die Wirkungsweise und der prinzipielle Aufbau von Dispersionspulvern ist bekannt und wird in vielen Publikationen beschrieben. Als Beispiele seien hier nur die Zitatstellen J. Schulze, TIZ 9 (1985), 3-14 und G. Schultz, VDI Berichte 384 (1980), 25-37 genannt.

Die Erhöhung der Haftzugfestigkeit spielt auch auf nicht hydrophoben Untergründen eine wesentliche Rolle. So wird z.B. in der EP-A-0 632 096 ein kaltwasserlöslicher, aminofunktionelle Vinyleinheiten enthaltender Polyvinylalkohol als Bestandteil eines redispergierbaren Dispersionspulvers beschrieben, der die Haftzugfestigkeit auf mineralischen Untergründen, wie z.B. Gehwegplatten verbessert.

Die Herstellung von Polyvinylacetal ist aus dem Stand der Technik bekannt. Überlicherweise geht man dabei von Polyvinylalkohol aus, den man in wäßriger Lösung säurekatalytisch mit Aldehyden zum Polyvinylacetal umsetzt. Dabei erfolgt die Umsetzung normalerweise bis zum vollständigen, theoretischen Umsatz aller Hydroxyfunktionalitäten, wodurch das daraus erhaltene Polyvinylacetal wasserunlöslich wird und ausfällt.

In der EP-A-0 594 026 wird ein Polyvinylacetal beschrieben, das durch den Einbau von sulfonatgruppentragenden Comonomereinheiten auch bei hohen Acetalisierungsgraden noch in Wasser löslich oder zumindest dispergierbar ist. In dieser Schrift wird darüber hinaus auch eine Isolierung des Polyvinylacetals durch Gefrier- oder Sprühtrocknung beschrieben. Es handelt sich bei diesem trockenen Polyvinylacetal jedoch nicht um ein Dispersionspulver im klassischen Sinn wie in den oben angegebenen Zitaten beschrieben.

Ebenfalls bekannt ist der Einsatz von Polyvinylacetal als Schutzkolloid bei der Emulsionspolymerisation. So wird in der DE-C- 936 063 die Acetalisierung von als Schutzkolloid eingesetztem Polyvinylalkohol während der Emulsionspolymerisation von Vinylacetat durch Zugabe von Aldehyden und Säuren während der eigentlichen Polymerisation beschrieben. Daraus erhaltene Dispersionen zeichnen sich offensichtlich durch eine gute Wasserfestigkeit aus.

In der DE-C-1 169 670 wird der Erhalt einer entsprechenden Wasserfestigkeit von Dispersionen durch den Einsatz eines Pfropfpolymerisats bestehend aus Polyethylenglykol und Vinylacetat beschrieben. In einigen Beispielen wird darüber hinaus der Einsatz von teilacetalisierten Polyvinylalkoholen erwähnt.
Im Gegensatz zur DE-C-936 063 beschreibt die DE-C-1 260 791 den Einsatz von acetalisierten Polyvinylalkoholen auf der Grundlage von einfach ungesättigten Aldehyden. Dabei kann offensichtlich durch den Einsatz der ungesättigten Aldehyde im direkten Vergleich zu den gesättigten Aldehyden die Viskosität der herzustellenden Dispersionen in gewünschter Weise beeinflußt werden.

In der DD-A- 222 880 wird der Einsatz von teilacetalisierten Polyvinylalkoholen bei der Emulsionspolymerisation beschrieben. Auch hier steht die Wasserfestigkeit der Filme im Vordergrund.

In der DD-A-251 560 schließlich wird eine Auswahl von teilacetalisierten Polyvinylalkoholen offenbart, die sich durch eine Mindestgrenzflächenspannung entsprechender Lösungen auszeichnen.

Es ist jedoch bekannt, daß Acetale bei niedrigen pH-Werten zur Rückspaltung neigen. Dies wird auch insbesondere bei der Schutzgruppenchemie genutzt. Da in allen Beispielen der oben genannten Dokumente entweder während der Polymerisation ein saurer Puffer mit einem pH-Wert unter 4 eingesetzt wird oder aber der Einsatz von Persulfaten als Initiatoren entsprechende pH-Werte ermöglicht, wie es bei der Polymerisation von vinylacetathaltigen Dispersionen üblich ist, ist eine Abspaltung der Acetalgruppen höchstwahrscheinlich. Folglich ist es sehr unwahrscheinlich, daß nach Beendigung der Polymerisation überhaupt noch teilacetalisierter Polyvinylalkohol vorliegt.

Ferner stellt sich die Frage, ob in Gegenwart von teilacetalisiertem Polyvinylacetal die beschriebene Schutzkolloidwirkung überhaupt erzielt werden kann. Die Polymerisationen finden nämlich immer bei Temperaturen von über 60°C, meistens sogar über 70°C, statt. Teilacetalisierte Polyvinylalkohole zeigen aber eine mit steigendem Acetalisierungsgrad verringerte Wasserlöslichkeit. So fällt z.B. im Falle von n-Butanal als Aldehyd selbst bei einem recht niedrigen Acetalisierungsgrad von 8,5%, was bei einem Hydrolysegrad des eingesetzten Polyvinylalkohols von 98 % einem gewichtsprozentigem Anteil von 6,6 % entspricht, bereits unterhalb von 60°C der teilacetalisierte Polyvinylalkohol aus der wäßrigen Lösung aus. Bei einem theoretischen Acetalisierungsgrad von 13,9 % (dies entspricht bei einem Hydrolysegrad von 98% einem gewichtprozentigem Anteil von 10,8 %) fällt das Polymer sogar schon bei ca. 30°C aus der Lösung aus.

Aufgabe der vorliegenden Erfindung war es, Dispersionspulver zu entwickeln, die die Haftzugsfestigkeit von damit modifizierten, zementgebundenen Trockenmörteln insbesondere nach Naßlagerung auf hydrophoben Untergründen, insbesondere Polystyrol, verbessern.

Überraschenderweise wurde gefunden, daß bei Zugabe von teilacetalisierten, jedoch noch wasserlöslichen Polyvinylalkoholen zur Dispersion nach der Versprühung Dispersionspulver erhalten werden, die eine verbesserte Naßhaftung der oben beschriebenen Trockenmörtel gewährleisten.

Gegenstand der vorliegenden Erfindung ist somit ein Dispersionspulver enthaltend
a) mindestens ein Basispolymerisat aus der Gruppe der Vinylester-, Vinylester-Comonomer-, Vinylester-Ethylen-, (Meth)acrylat- und Styrol-Acrylat-Polymerisate,
b) 1 bis 25 Gew.-%, bezogen auf das Basispolymerisat, mindestens eines Schutzkolloides,
c) 1 bis 25 Gew.-%, bezogen auf das Basispolymerisat, mindestens eines teilacetalisierten, wasserlöslichen Polyvinylalkohols,
d) 0 bis 20 Gew.-%, bezogen auf das Polymergesamtgewicht, Antibackmittel, sowie
e) gegebenenfalls weitere Additive.

Bevorzugt ist ein Dispersionspulver enthaltend
a) ein Basispolymerisat aus der Gruppe der Vinylester-, Vinylester-Comonomer-, Vinylester-Ethylen-, (Meth)acrylat- und Styrol-Acrylat-Polymerisate,
b) 1 bis 25 Gew.-%, bezogen auf das Basispolymerisat, eines Schutzkolloides,
c) 1 bis 25 Gew.-%, bezogen auf das Basispolymerisat, eines teilacetalisierten, wasserlöslichen Polyvinylalkohols,
d) 0 bis 20 Gew.-%, bezogen auf das Polymergesamtgewicht, Antibackmittel, sowie
e) gegebenenfalls weitere Additive.

Geeignete Vinylester-Polymerisate a) sind vorzugsweise Vinylacetat-Homopolymere oder Copolymere des Vinylacetats mit Ethylen und/oder weiteren Vinylestern, wie Vinylpropionat, Vinylpivalat, Vinylester von ®Versatic-Säure 9, 10 oder 11 (Shell-Chemie, α,α-Dialkyl-verzweigte Carbonsäuren), Vinyl-2-ethylhexanoat und/oder Estern der Acrylsäure und/oder Methacrylsäure mit geradkettigen, verzweigten oder cyclischen Alkoholen mit 1 bis 22 Kohlenstoffatomen, insbesondere 1 bis 12 Kohlenstoffatomen.

Geeignete (Meth)acrylat- und Styrol-(Meth)acrylat-Polymerisate a) sind vorzugsweise Polymerisate aus Styrol und/oder Estern der Acrylsäure und/oder Methacrylsäure mit geradkettigen, verzweigten oder cyclischen aliphatischen Alkoholen mit 1 bis 22 Kohlenstoffatomen, insbesondere 1 bis 12 Kohlenstoffatomen.

Als Schutzkolloid b) kommen übliche Schutzkolloide, beispielsweise Celluloseether, wasserlösliche Stärke, Polyvinylpyrrolidon und Polycarbonsäure, vorzugsweise Polyvinylalkohol in Frage.

Der Polymerisationsgrad des Polyvinylalkohols b) liegt vorzugsweise im Bereich von 200 bis 3500, besonders bevorzugt zwischen 500 und 3000. Der Hydrolysegrad beträgt vorzugsweise 80 bis 98 Mol-%, insbesondere 85 bis 98 Mol-%.

Der Anteil der teilacetalisierten, wasserlöslichen Polyvinylalkohole c) liegt vorzugsweise zwischen 3 und 12 Gew.-%, bezogen auf das Basispolymerisat.

Der Acetalisierungsgrad des Polyvinylalkohols c) liegt im Bereich von 1 bis 20 Mol-%, vorzugsweise zwischen 2 und 18 Mol-% und besonders bevorzugt zwischen 4 und 16 Mol-%.
Der Hydrolysegrad des Polyvinylalkohols c) liegt im Bereich von 50 bis 100 Mol-%, vorzugsweise zwischen 70 und 100 Mol-% und besonders bevorzugt zwischen 80 und 100 Mol-%.

Der Polymerisationsgrad des Polyvinylalkohols c) liegt vorzugsweise im Bereich von 200 bis 3500, besonders bevorzugt zwischen 500 und 3000.

Der Anteil an Antibackmittel d) liegt vorzugsweise zwischen 1 und 20 Gew.-%, bezogen auf das Polymergesamtgewicht.

Geeignete Antibackmittel d) sind vorzugsweise Aluminiumsilikate, Calciumcarbonate oder Kieselsäuren sowie basische Verwachsungen von Talk und Dolomit, wobei Aluminiumsilikate besonders bevorzugt sind. Die Antibackmittel besitzen vorzugsweise eine Teilchengröße von 0,001 bis 0,5 mm.

Als Additive e) können Zementverflüssiger, wie z.B. Melaminformaldehydkondensate, abbinderegulierende Additive zur Zementhydratation, wie z.B. Calcium-Formiat oder organische Fruchtsäuren, Netzmittel, wie z.B. Alkylpolyglykole, Weichmacher, wie z.B. Dibutylphthalat, Rheologiemodifizierer, wie z.B. Polycarboxylate oder Dispersionsentschäumer, wie z.B. Polyethersiloxane, eingesetzt werden.

Ein weiterer Gegenstand der vorliegenden Erfindung ist ein Verfahren zur Herstellung des erfindungsgemäßen Dispersionspulvers, bei dem man eine Dispersion enthaltend Basispolymerisat a), Schutzkolloid b) sowie ggfs. weitere Additive mit den teilacetalisierten, wasserlöslichen Polyvinylalkoholen mischt und anschließend, gegebenenfalls unter gleichzeitigem Zumischen des Antibackmittels, die erhaltene Mischung trocknet.

Die Zugabe von teilacetalisiertem Polyvinylalkohol erfolgt dabei nach Ende der Polymerisation vorzugsweise kurz vor der Sprühtrocknung, da in diesem Falle der pH-Wert der Dispersion unberücksichtigt bleiben kann.

Der teilacetalisierte Polyvinylalkohol kann als Feststoff oder als wäßrige Lösung vorliegen und zur Dispersion zugegeben werden, wobei es vorteilhaft ist, die durch den Herstellungsprozeß sowieso vorliegende wäßrige Lösung direkt zur Dispersion dazu zugeben ohne den teilacetalisierten Polyvinylalkohol zu isolieren. Die Herstellung kann dabei in allen dem Fachmann zu diesem Zweck bekannten Vorrichtungen durchgeführt werden.

Vorzugsweise wird die erhaltene Mischung in einem Trockenturm sprühgetrocknet. Dabei werden die genannten Zusatzstoffe geeigneterweise vor der Versprühung in die Dispersion eingerührt. Die Versprühung erfolgt beispielsweise mit einer Zweistoffdüse oder einer Rotationsscheibe bei einer Temperatur des Trockengases zwischen 100 und 180°C. Dabei wird zur Erhöhung der Lagerstabilität und der Rieselfähigkeit des Dispersionspulvers das Antibackmittel in einer geeigneten Menge parallel zur Dispersion in den Sprühturm eingebracht, wodurch es zu einer Ablagerung der Antibackmittel auf den Dispersionsteilchen kommt. Durch die genannten Verfahren erhält man gut redispergierbare Dispersionspulver.

Die erfindungsgemäßen Dispersionspulver finden vorzugsweise Verwendung zur Modifizierung von Mörtel sowie in Klebe- und Armierungsspachtel für Wärmedämm-Verbundsysteme. Sie führen insbesondere zu einer Erhöhung der Haftzug- und/oder Biegezugfestigkeit von Mörtel.

Die Erfindung wird im folgenden anhand von Ausführungsbeispielen näher beschrieben.

Als teilacetalisierte Polyvinylalkohole wurden die in Tabelle 1 angegebenen Typen synthetisiert und eingesetzt.

**Tabelle 1**

| Muster | A | B | C | D |
|---|---|---|---|---|
| Aldehyd | Butanal | Butanal | 4-Hydroxybenzaldehyd | Butanal |
| Anfangshydrolysegrad des Polyvinylalkohols | 88% | 88% | 98% | 98% |
| Theoretischer Acetalisierungsgrad | 14% | 7% | 4,9% | 13,9% |
| Gew.-% Aldehyd bezogen auf den eingesetzten Polyvinylalkohol | 9,0% | 4,5% | 6,4% | 11,0% |
| Feststoffgehalt der Lösung | 15,9% | 15,0% | 14,9% | 15,5% |

### Folgende Dispersionen wurden eingesetzt:

### Dispersion 1:

Polyvinylalkohol-stabilisierte Vinylacetat-Ethylen-Copolymer-Dispersion mit einem Feststoffgehalt von ca. 58%.

### Dispersion 2:

Polyvinylalkohol-stabilisierte Vinylacetat-Versaticsäurevinylester-Copolymer-Dispersion (Versaticsäurevinylester z.B. ®VeoVa10 der Fa. Shell) mit einem Feststoffgehalt von ca. 50%.

### Dispersion 3:

Polyvinylalkohol-stabilisierte Vinylacetat-Versaticsäurevinylester-Butylacrylat-Terpolymer-Dispersion (Versaticsäurevinylester z.B. ®VeoVa10 der Fa. Shell) mit einem Feststoffgehalt von ca. 53%.

### Dispersion 4:

Polyvinylalkohol-stabilisierte Methylmethacrylat-Butylacrylat-Copolymer-Dispersion mit einem Feststoffgehalt von ca. 50%.

### Dispersion 5:

Polyvinylalkohol-stabilisierte Vinylacetat-Dibutylmaleinat-Copolymer-Dispersion mit einem Feststoffgehalt von ca. 50%.

### Herstellung der Dispersionspulver:

Stellvertretend für alle Dispersionspulver wird die Herstellung anhand des Dispersionspulvers 1 ausführlich beschrieben.

Zur Dispersion 1 werden 2,5 Gewichtsteile, bezogen auf das Basispolymerisat der Dispersion 1, teilacetalisierter, wasserlöslicher Polyvinylalkohole c) zugegeben. Dann wird bei Bedarf durch Zugabe von Wasser eine Versprühviskosität von ca. 400 mPas (nach Haake, bei D = 17,93s⁻¹) eingestellt. Die Mischung wird mit Hilfe einer Zweistoffdüse versprüht. Während des Versprühens wird ein Antibackmittel so zudosiert, daß der Anteil des Antibackmittels im Dispersionspulver 15 Gew.-%, bezogen auf das Polymergesamtgewicht, beträgt. Man erhält ein lagerstabiles, gut rieselfähiges Pulver.

Die Zusammensetzung der erfindungsgemäßen Dispersionspulver (DP1 bis DP14) sowie der Vergleichs-Dispersionspulver (VDP1 bis VDP7) ist in Tabelle 2 zusammenfassend mit den anwendungstechnischen Ausprüfungsergebnissen beschrieben.

Im Falle der Vergleichsbeispiele werden anstelle der Zugabe eines teilacetalisierten Polyvinylalkohols die diesen Produkten zugrundeliegenden Polyvinylalkohole mit den entsprechenden Hydrolysegraden und Molekulargewichten eingesetzt.

### Anwendungstechnische Prüfung:

### Rezeptur 1:

Für Rezeptur 1 wurde eine Grundmischung folgender Zusammensetzung hergestellt:

| Einwaage | Rohstoff |
|---|---|
| 1000GT | CEM I 42,5 R |
| 1840GT | Quarzsand F 34 |
| 224GT | ®Omyacarb 130 AL |
| 572GT | Calcilit 0,1-0,5 |
| 176GT | Calcilit 0,5-1,0 |
| 8GT | ®Tylose MH 15.002 P6 |

### Rezeptur 2:

Für Rezeptur 2 wurde eine Grundmischung folgender Zusammensetzung hergestellt:

| Einwaage | Rohstoff |
|---|---|
| 1400GT | CEM I 42,5 R |
| 2412GT | Quarzsand ZE 23 |
| 8GT | ®Tylose MH 15.009 P2 |

Zur Bestimmung der Haftzugfestigkeiten wurde das Haftzugprüfgerät Herion HP 850 mit 3,5 KN Zugkolben verwendet.

Die Prüfung der EPS-Haftung erfolgte für Rezeptur 1 in Anlehnung an die UEATc Richtlinien vom April 1992:

388 g Grundmischung "Rezeptur 1" wurde jeweils mit 12 g des zu prüfenden Dispersionspulvers trocken homogenisiert, mit 80 g Wasser per Hand angemischt und unter einem Lenartrührer 15 Sekunden mit hoher Schergeschwindigkeit gerührt. Eine Reifezeit von mindestens 5 Minuten wurde eingehalten. Eine Schablone wurde längs über die zu beschichtende EPS Platte aufgelegt und mit einem Teil des Klebers beschichtet. Mittels einem Spachtel wurde die Masse verteilt und dabei auf guten Kontakt zum EPS geachtet.

Anschließend wurde der Kleber auf Schablonenschichtdicke glatt abgezogen. Mit einem Kunststoffring wurden anschließend 5 Prüfflächen abgesteckt und der restliche Kleber vom EPS entfernt.
Die Probekörper wurden 6 Tage bei Raumtemperatur gelagert und die Zugeisen (Ø = 50 mm) mittels Epoxidharzkleber aufgeklebt. Am nächsten Tag wurden pro Klebermischung 2 Prüfstempel gezogen. Die Kraftanstiegsgeschwindigkeit wurde dabei auf 10 N/s eingestellt. Anschließend wurde die EPS Platte über 2 Tage im Wasserbad kopfüber gelagert, 2 Stunden getrocknet und die Haftzugfestigkeit bestimmt.

Die Prüfung der EPS-Haftung erfolgte für Rezeptur 2 in Anlehnung an die Ö-Norm 6121:

382 g Grundmischung "Rezeptur 2" wurde jeweils mit 18 g des zu prüfenden Dispersionspulvers trocken homogenisiert, mit 80 g Wasser per Hand angemischt und unter einem Lenartrührer 15 Sekunden mit hoher Schergeschwindigkeit gerührt. Eine Reifezeit von mindestens 5 Minuten wurde eingehalten. Eine Schablone wurde längs über die zu beschichtende EPS Platte aufgelegt und mit einem Teil des Klebers beschichtet. Mittels einem Spachtel wurde die Masse verteilt und dabei auf guten Kontakt zum EPS geachtet.

Anschließend wurde der Kleber auf Schablonenschichtdicke glatt abgezogen. Mit einem Kunststoffring wurden anschließend 5 Prüfflächen abgesteckt und der restliche Kleber vom EPS entfernt.

Die Probekörper wurden 13 Tage bei Raumtemperatur gelagert und die Zugeisen (Ø = 50 mm) mittels Epoxidharzkleber aufgeklebt. Am nächsten Tag wurden pro Klebermischung 2 Prüfstempel gezogen. Die Kraftanstiegsgeschwindigkeit wurde dabei auf 65 N/s eingestellt. Anschließend wurde die EPS Platte 1 Tag im Wasserbad kopfüber gelagert und die Haftzugfestigkeit bestimmt.

Die Ergebnisse sind zusammenfassend in Tabelle 2 wiedergegeben. Es wird deutlich, daß in allen Fällen die erfindungsgemäßen Dispersionspulver besser in der Haftung nach Naßlagerung sind als die entsprechenden Vergleichsbeispiele.

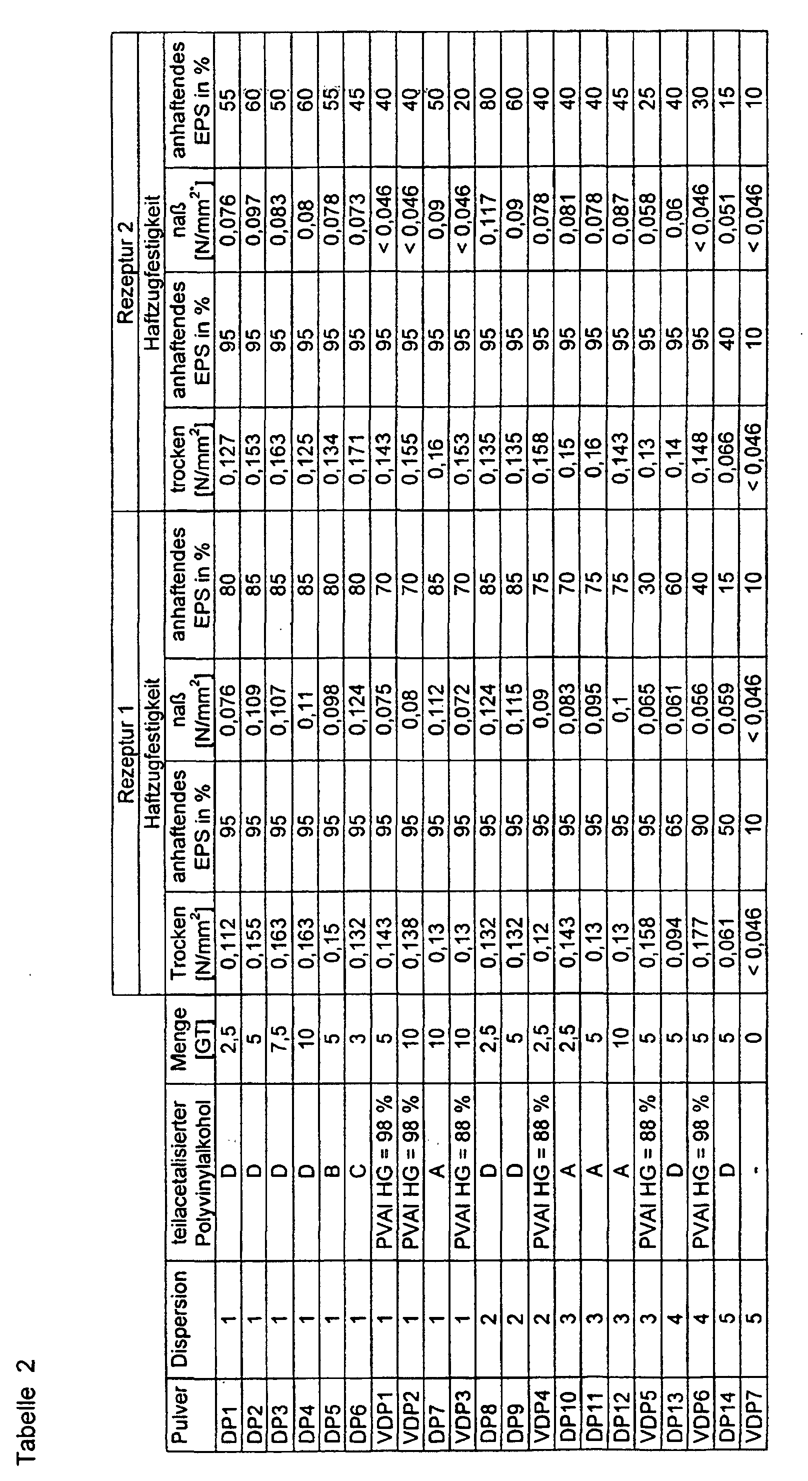

## Patentansprüche

1. Dispersionspulver enthaltend
a) mindestens ein Basispolymerisat aus der Gruppe der Vinylester-, Vinylester-Comonomer-, Vinylester-Ethylen-, (Meth)acrylat- und Styrol-Acrylat-Polymerisate,
b) 1 bis 25 Gew.-%, bezogen auf das Basispolymerisat, mindestens eines Schutzkolloides,
c) 1 bis 25 Gew.-%, bezogen auf das Basispolymerisat, mindestens eines teilacetalisierten, wasserlöslichen Polyvinylalkohols,
d) 0 bis 20 Gew.-%, bezogen auf das Polymergesamtgewicht, Antibackmittel, sowie
e) gegebenenfalls weitere Additive.

2. Dispersionspulver gemäß Anspruch 1, **dadurch gekennzeichnet, daß** das Polymerisat a) ein Vinylacetat-Copolymerisat ist.

3. Dispersionspulver gemäß Anspruch 1 oder 2, **dadurch gekennzeichnet, daß** das Schutzkolloid b) Polyvinylalkohol ist.

4. Dispersionspulver gemäß Anspruch 3, **dadurch gekennzeichnet, daß** der Polyvinylalkohol b) einen Polymerisationsgrad von 200 bis 3500 und einen Hydrolysegrad von 80 bis 98 Mol-% aufweist.

5. Dispersionspulver gemäß mindestens einem der Ansprüche 1 bis 4, **dadurch gekennzeichnet, daß** der Anteil der teilacetalisierten, wasserlöslichen Polyvinylalkohole c) im Bereich von 3 bis 12 Gew.-%, bezogen auf das Basispolymerisat, liegt.

6. Dispersionspulver gemäß einem der Ansprüche 1 bis 5, **dadurch gekennzeichnet, daß** der teilacetalisierte, wasserlösliche Polyvinylalkohol einen Acetalisierungsgrad von 1 bis 20 Mol-% und einen Hydrolysegrad von 50 bis 100 Mol-% aufweist.

7. Dispersionspulver gemäß mindestens einem der Ansprüche 1 bis 6, **dadurch gekennzeichnet, daß** 1 bis 20 Gew.-%, bezogen auf die Gesamtmasse des Polymerisats, Antibackmittel d) enthalten ist.

8. Verfahren zur Herstellung eines Dispersionspulvers gemäß mindestens einem der Ansprüche 1 bis 7, bei dem man eine Dispersion enthaltend Basispolymerisat a), Schutzkolloid b) sowie ggfs. weitere Additive mit den teilacetalisierten, wasserlöslichen Polyvinylalkoholen mischt und anschließend, gegebenenfalls unter gleichzeitigem Zumischen des Antibackmittels, die erhaltene Mischung trocknet.

9. Verfahren gemäß Anspruch 8, **dadurch gekennzeichnet, daß** man die erhaltene Mischung in einem Trockenturm sprühtrocknet.

10. Verwendung eines Dispersionspulvers gemäß mindestens einem der Ansprüche 1 bis 7, zur Modifizierung von Mörtel.

11. Verwendung eines Dispersionspulvers gemäß mindestens einem der Ansprüche 1 bis 7, in Klebe- und Armierungsspachtel für Wärmedämm-Verbundsysteme.

12. Verwendung eines Dispersionspulvers gemäß mindestens einem der Ansprüche 1 bis 7 zur Erhöhung der Haftzug- und/oder Biegezugfestigkeit von Mörtel.

## Claims

1. A dispersion powder comprising
a) at least one base polymer from the group consisting of the vinyl ester, vinyl ester comonomer, vinyl ester/ethylene, (meth)acrylate and styrene/acrylate polymers,
b) from 1 to 25% by weight, based on the base polymer, of at least one protective colloid,
c) from 1 to 25% by weight, based on the base polymer, of at least one partially acetalized, water-soluble polyvinyl alcohol,
d) from 0 to 20% by weight, based on the total polymer weight, of anticaking agent and
e) if required, further additives.

2. The dispersion powder as claimed in claim 1, wherein the polymer a) is vinyl acetate copolymer.

3. The dispersion powder as claimed in claim 1 or 2, wherein the protective colloid b) is polyvinyl alcohol.

4. The dispersion powder as claimed in claim 3, wherein the polyvinyl alcohol b) has a degree of polymerization of from 200 to 3500 and a degree of hydrolysis of from 80 to 98 mol%.

5. The dispersion powder as claimed in at least one of claims 1 to 4, wherein the proportion of the partially acetalized, water-soluble polyvinyl alcohols c) is in the range from 3 to 12% by weight, based on the base polymer.

6. The dispersion powder as claimed in any of claims 1 to 5, wherein the partially acetalized, water-soluble polyvinyl alcohol has a degree of acetalization of from 1 to 20 mol% and a degree of hydrolysis of from 50 to 100 mol%.

7. The dispersion powder as claimed in at least one of claims 1 to 6, wherein from 1 to 20% by weight, based on the total mass of the polymer, of anticaking agent d) is present.

8. A process for the preparation of a dispersion powder as claimed in at least one of claims 1 to 7, in which a dispersion comprising base polymer a), protective colloid b) and, if required, further additives is mixed with the partially acetalized, water-soluble polyvinyl alcohols, and the mixture obtained is then dried, if required with simultaneous admixing of the anticaking agent.

9. The process as claimed in claim 8, wherein the mixture obtained is spray-dried in a drying tower.

10. The use of a dispersion powder as claimed in at least one of claims 1 to 7 for modifying mortars.

11. The use of a dispersion powder as claimed in at least one of claims 1 to 7 in adhesive and reinforcing plasters for composite heat insulation systems.

12. The use of a dispersion powder as claimed in at least one of claims 1 to 7 for increasing the tensile adhesive strength and/or tensile bending strength of mortars.

## Revendications

1. Poudre dispersée contenant
a) au moins un polymère de base, choisi dans l'ensemble comprenant les polymères d'esters vinyliques, d'un comonomère ester vinylique, d'ester vinylique-éthylène, de (méth)acrylate et de styrène-acrylate,
b) de 1 à 25 % en poids, par rapport au polymère de base, d'au moins un colloïde protecteur,
c) de 1 à 25 % en poids, par rapport au polymère de base, d'au moins un poly(alcool vinylique) soluble dans l'eau et partiellement acétalisé,
d) de 0 à 20 % en poids, par rapport au poids total du polymère, d'un antimottant, et
e) éventuellement, d'autres additifs.

2. Poudre dispersée selon la revendication 1, **caractérisée en ce que** le polymère a) est un copolymère d'acétate de vinyle.

3. Poudre dispersée selon la revendication 1 ou 2, **caractérisée en ce que** le colloïde protecteur b) est un poly(alcool vinylique).

4. Poudre dispersée selon la revendication 3, **caractérisée en ce que** le poly(alcool vinylique) b) a un degré de polymérisation de 200 à 3500 et un degré d'hydrolyse de 80 à 98 % en moles.

5. Poudre dispersée selon au moins l'une des revendications 1 à 4, **caractérisée en ce que** la proportion des poly(alcools vinyliques) c) solubles dans l'eau et partiellement acétalisés est comprise dans la plage de 3 à 12 % en poids par rapport au polymère de base.

6. Poudre dispersée selon l'une des revendications 1 à 5, **caractérisée en ce que** le poly(alcool vinylique) soluble dans l'eau et partiellement acétalisé a un degré d'acétalisation de 1 à 20 % en moles et un degré d'hydrolyse de 50 à 100 % en moles.

7. Poudre dispersée selon au moins l'une des revendications 1 à 6, **caractérisée en ce qu'**elle contient de 1 à 20 % en poids, par rapport au poids total du polymère, de l'antimottant d).

8. Procédé de préparation d'une poudre dispersée selon au moins l'une des revendications 1 à 7, dans lequel on mélange une dispersion contenant le polymère de base a), le colloïde protecteur b), et éventuellement d'autres additifs, avec des poly(alcools vinyliques) solubles dans l'eau et partiellement acétalisés, puis on sèche le mélange obtenu, éventuellement en ajoutant simultanément l'antimottant.

9. Procédé selon la revendication 8, **caractérisé en ce qu'**on sèche par atomisation dans une tour de séchage le mélange obtenu.

10. Utilisation d'une poudre dispersée selon au moins l'une des revendications 1 à 7 pour modifier du mortier.

11. Utilisation d'une poudre dispersée selon au moins l'une des revendications 1 à 7 dans des masses à spatuler, à effet d'adhérence et d'armature, pour des systèmes composites calorifuges.

12. Utilisation d'une poudre dispersée selon au moins l'une des revendications 1 à 7 pour augmenter la contrainte d'adhérence de traction et/ou la résistance à la flexion par traction de mortiers.
